# EUROPEAN PATENT APPLICATION

(11) **EP 3 290 747 A1**
(43) Date of publication of application: **07.03.2018**
(21) Application number: 16844499.0
(22) Date of filing: 09.09.2016
(51) Int. Cl.: F16H 13/04

(54) **FRICTION WHEEL ASSEMBLY AND METHOD FOR MANUFACTURING SAME**

(30) Priority: 09.09.2015 JP 2015177639; 10.12.2015 JP 2015241143; 26.08.2016 JP 2016165634
(71) Applicant: NTN Corporation, Osaka-shi, Osaka 550-0003 (JP)
(72) Inventor: IZUTSU Tomoyoshi, Iwata-shi Shizuoka 438-8510 (JP); TAKAGI Rikuo, Iwata-shi Shizuoka 438-8510 (JP); INOUE Masaharu, Iwata-shi Shizuoka 438-8510 (JP)
(74) Representative: Grünecker Patent- und Rechtsanwälte PartG mbB
(86) International application number: PCT/JP2016/076658
(87) International publication number: WO 2017/043638

(57) **Abstract**

A friction wheel assembly is provided which includes a friction wheel (31), a bracket (23), a pivot arm (16), a pair of guide rods (20), and elastic members (33) supported by the respective guide rods (20), and biasing the bracket (23) in the direction in which the friction wheel (31) comes into elastic contact with a driving wheel (1) and a driven wheel (2). The friction wheel assembly is configured such that if the contact pressure of the friction wheel (31) against the driving wheel (1) differs from the contact pressure thereof against the driven wheel (2), the pivot arm (16) and the bracket (23) pivot due to the reaction force applied to the friction wheel (31) from one of the driving and driven wheels against which the contact pressure is higher, thereby equalizing the contact pressure of the friction wheel (31) against the driving wheel (1) and the contact pressure thereof against the driven wheel (2).

## Description

### TECHNICAL FIELD

The present invention relates to a friction wheel assembly including a friction wheel disposed between the opposed portions of a driving wheel and a driven wheel, and configured to transmit the rotation of the driving wheel to the driven wheel when the friction wheel comes into frictional contact with the driving and driven wheels, and to a method for manufacturing such a friction wheel assembly.

### BACKGROUND ART

In an engine provided with an integrated starter/generator (ISG), i.e., a generator which is also used as a motor, and configured to be stopped when the vehicle stops so as to reduce the emission of carbon dioxide, and to be started instantly by the ISG when the accelerator pedal is pushed in to move the vehicle, a belt transmission device is ordinarily used to transmit the rotation of the crankshaft of the engine to engine accessories such as a water pump and to the ISG, and to transmit the rotation of the ISG to the crankshaft to start the engine.

This engine power transmission device, i.e., the above-described type of belt transmission device always transmits the rotation of the crankshaft to the water pump. Therefore, even when the water pump does not need to be rotated, e.g., during warming up of the engine, or even when the engine revolution needs to be increased quickly to the maximum efficiency range, the water pump rotates, thus causing a large torque loss and increasing fuel consumption.

In order to overcome this problem, the below-identified Patent document 1 discloses, as the engine power transmission device, a belt drive including a driving wheel mounted to one end of the crankshaft; a driven wheel mounted to the rotary shaft of an engine accessory; and a friction wheel assembly mounted between the driving wheel and the driven wheel, and including a friction wheel capable of being brought into and out of contact with the driving and driven wheels such that the water pump is driven by moving the friction wheel to the position where the friction wheel is in contact with the driving and driven wheels, thereby transmitting motive power from the driving wheel to the driven wheel due to the friction wheel being in frictional contact with and rotating together with the driving and driven wheels.

The belt drive is further configured such that when the engine is started by driving the integrated starter/generator (ISG), the friction wheel is separated from the driving and driven wheels, thereby stopping the transmission of motive power from the driving wheel to the driven wheel.

### PRIOR ART DOCUMENT (S)

### PATENT DOCUMENT (S)

Patent document 1: Japanese Patent No. 4891914

### SUMMARY OF THE INVENTION

### PROBLEMS TO BE SOLVED BY THE INVENTION

This belt drive includes an arm rotatably supporting the friction wheel at its distal end, and an operating device configured to pivot the arm about the rear end thereof such that the friction wheel moves between the engaged position where the friction wheel is in contact with the driving wheel and the driven wheel and the disengaged position where the friction wheel is disengaged from the driven wheel while in contact with the driving wheel. In this arrangement, it is impossible to bring the friction wheel uniformly into contact with both the driving wheel and the driven wheel in the engaged position, and thus to stably transmit motive power by friction. Also, since a large space is necessary to mount the arm and the operating device in position, the power transmission device tends to be large in size, and the freedom of layout is restricted.

If the above belt drive is used so as to drive an engine accessory belt, water tends to be applied to the friction wheel due to e.g., water splashed from the lower portion of the vehicle. Therefore, in order to prevent the occurrence of rust in the friction wheel due to such water, in some cases, the surface of the friction wheel is subjected to rust preventing treatment such as plating. Also, in order to more efficiently transmit motive power between the driving wheel and the driven wheel, in some cases, a friction material layer such as rubber is formed on the outer diameter surface of the friction wheel.

In order to form such a friction material layer thereon, in many cases, the friction wheel is preheated, and an elastic material such as rubber which has been heated and softened is formed on the outer diameter surface of the friction wheel. However, it is known that a plating film by a wet method, such as generally-used electric zinc plating, tends to separate from the friction wheel due to e.g., the preheating of the friction wheel or the heated elastic material. Furthermore, the surface of such an electric zinc plating film is dense, flat, and smooth, thus making it difficult to reliably keep the electric zinc plating film in close contact with the friction material layer formed on the surface of the plating film. As a result thereof, the use of the friction wheel for a long period of time may separate the plating film from the friction material layer, thereby making it impossible to transmit motive power in an accurate manner.

It is a first object of the present invention to provide a friction wheel assembly having a simple structure, capable of being easily mounted in position, and being capable of stably transmitting motive power between the driving wheel and the driven wheel by friction. It is a second object of the present invention to provide a small-sized friction wheel assembly. It is a third object of the present invention to extend the service life of the friction wheel of the friction wheel assembly while stabilizing the friction-based transmission of motive power between the driving wheel and the driven wheel.

### MEANS FOR SOLVING THE PROBLEMS

In order to achieve the above first object, the present invention provides a friction wheel assembly comprising a friction wheel configured to come into frictional contact with an outer diameter surface of a driving wheel and an outer diameter surface of a driven wheel such that rotation of the driving wheel is transmitted to the driven wheel through the friction wheel, characterized in that the friction wheel assembly further comprises: an arm supporting shaft mounted to an object for supporting the friction wheel assembly; a pivot arm having a central portion between two ends of the pivot arm, the central portion being supported by the arm supporting shaft such that the pivot arm is pivotable about the arm supporting shaft; a pair of guide rods having first ends supported, respectively, by the two ends of the pivot arm, and extending in parallel to each other; a bracket having a first end slidably supported by the guide rods; wherein the friction wheel is supported by a second end of the bracket so as to be rotatable about a center axis of the friction wheel extending in parallel to the arm supporting shaft; and elastic members supported by the respective guide rods, and biasing the bracket in a direction in which the friction wheel comes into elastic contact with the outer diameter surface of the driving wheel and the outer diameter surface of the driven wheel.

In order to mount the friction wheel assembly configured as described above, the friction wheel is brought into contact with the outer diameter surfaces of the driving and driven wheels such that the center lines of the guide rods intersect with the straight line connecting the centers of the driving and driven wheels. Thereafter, the elastic members are compressed by the movement of the pivot arm toward the bracket. In this state, the arm supporting shaft is fixed to the object for supporting the friction wheel assembly.

By mounting the friction wheel assembly in this way, the elastic restoring forces of the elastic members keep the friction wheel in elastic contact with the outer diameter surfaces of the driving and driven wheels.

When the friction wheel comes into contact with the driving wheel and the driven wheel, if the contact pressure of the friction wheel against the driving wheel differs from the contact pressure thereof against the driven wheel, due to the reaction force applied to the friction wheel from one of the driving and driven wheels against which the contact pressure is higher, a moment load is applied to the bracket such that the pivot arm and the bracket pivot about the arm supporting shaft until the contact pressure of the friction wheel against the driving wheel becomes equal to the contact pressure thereof against the driven wheel.

Preferably, the imaginary plane containing the center axes of the guide rods coincides with the imaginary plane bisecting the axial width of the friction wheel while intersecting at right angles with the center axis of the friction wheel, about which the friction wheel is rotatable, thereby locating the center of gravity of the friction wheel assembly on the bisecting imaginary flat surface.

Since, as described above, the center of gravity of the friction wheel assembly is located on the imaginary plane bisecting the axial width of the friction wheel while intersecting at right angles with the center axis of the friction wheel, about which the friction wheel is rotatable, a rotation moment that could cause the friction wheel to tilt is never applied to the friction wheel assembly, so that it is possible to stably keep the friction wheel in contact with both the driving wheel and the driven wheel.

The elastic members, by which the friction wheel is kept in elastic contact with both the driving wheel and the driven wheel, may be mounted between the opposed portions of the pivot arm and the bracket or between the opposed portions of the bracket and the guide rods.

In order to achieve the above second object, preferably, the friction wheel assembly is configured such that the pivot arm and the bracket are received in the friction wheel, the friction wheel includes a disk portion provided inside of the friction wheel, and formed with an opening, the guide rods include anti-separation portions at the respective second ends of the guide rods, and the elastic members bias the bracket toward the anti-separation portions, and the friction wheel assembly further comprises: an engagement portion located inside of the friction wheel; and a set member capable of being fitted to and removed from the engagement portion by being passed through the opening of the disk portion, and configured to keep the elastic members compressed with the set member fitted to the engagement portion.

In order to mount the friction wheel assembly configured as described above in a power transmission device, the friction wheel is pushed in the direction in which the bracket approaches the pivot arm such that the elastic members are compressed. Thereafter, the set member is inserted into the friction wheel through the opening of the disk portion of the friction wheel, and fitted to the engagement portion so as to keep the friction wheel at the position where the elastic members are fully compressed. In this state, the friction wheel assembly is placed on one side of the space between the opposed portions of the driving and driven wheels, and the arm supporting shaft is fixed to the object for supporting the friction wheel assembly, thereby mounting the friction wheel assembly in position.

When the set member is removed through the opening of the disk portion after the friction wheel assembly is mounted as described above, due to the elastic restoring forces of the elastic members, the bracket, which rotatably supports the friction wheel, moves away from the pivot arm, so that the friction wheel moves toward the outer diameter surfaces of the driving and driven wheels until the friction wheel comes into elastic contact with the outer diameter surfaces thereof.

At this time, if the friction wheel abuts against the outer diameter surface of one of the driving and driven wheels before it abuts against the outer diameter surface of the other wheel, due to the pressing force of the elastic member remoter from the portion of the friction wheel abutting against the one of the driving and driven wheels, the pivot arm pivots about the arm supporting shaft, and thus is displaced to the position corresponding to the positions of the driving and driven wheels, thereby bringing the friction wheel into contact with the other wheel as well. As a result thereof, the friction wheel uniformly comes into elastic contact with both the driving wheel and the driven wheel.

Since, in this way, the friction wheel uniformly comes into elastic contact with both the driving wheel and the driven wheel due to the elastic members, it is possible to stably transmit motive power from the driving wheel to the driven wheel due to the friction between the friction wheel and the driving wheel and between the friction wheel and the driven wheel.

In the friction wheel assembly according to the present invention, the engagement portion, which is configured such that the set member is fitted to and removed from the engagement portion, and capable of keeping the elastic members compressed with the set member fitted to the engagement portion, may be one of two engagement portions each provided between the opposed portions of the bracket and the anti-separation portion of the corresponding guide rod, or may be one of two engagement portions each comprising communication holes constituted by: a set hole extending from the outer periphery of the bracket at one end of the bracket toward the outer periphery of the corresponding guide rod; and a radial pin hole formed in the outer periphery of the corresponding guide rod, the two engagement portions being configured such that when the bracket slides toward the pivot arm, the set holes of the respective engagement portions communicate with the respective radial pin holes.

If the friction wheel assembly includes two engagement portions provided between the opposed portions of the bracket and the anti-separation portions of the respective guide rods, the set member may comprise a strip-shaped plate including an operation piece and a pair of insertion pieces provided at the respective ends of the operation piece such that the set member has the shape of a Japanese character " 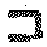 " in plan view, and configured such that the insertion pieces can be fitted to the respective two engagement portions so as to sandwich the guide rods, or may be one of two strip-shaped plates each including a pair of insertion pieces constituting the lateral sides of the strip-shaped plate such that the strip-shaped plate has the shape of U in plan view, the pair of insertion pieces of each of the strip-shaped plates being configured to be fitted to the corresponding one of the two engagement portions so as to sandwich the corresponding one of the guide rods.

Each of the guide rods has an outer periphery comprising a first half outer peripheral portion and a second half outer peripheral portion. If the insertion pieces of the 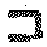 -shaped strip-shaped plate include, respectively, distal ends provided with semicircular bent portions each engageable with the first half outer peripheral portion of the corresponding one of the guide rods, or the insertion pieces of each of the U-shaped strip-shaped plates include, respectively, distal ends provided with semicircular bent portions engageable, respectively, with the first half outer peripheral portion and the second half outer peripheral portion of the corresponding one of the guide rods, it is possible to keep the set member fitted in a stable manner.

If the friction wheel assembly includes two engagement portions each comprising communication holes constituted by: a set hole formed in the outer periphery of the bracket at one end of the bracket; and a radial pin hole formed in the outer periphery of the corresponding one of the guide rods, the set member comprises a single pin which can be fitted to and removed from the two engagement portions (communication holes), or the set member is one of two set members comprising, respectively, two pins which can be fitted to and removed from the respective two engagement portions (communication holes). If the set member is one of the two set members, each of the two pins of the two set members comprises a needle-shaped pin having an end provided with a ring-shaped, fingertip engagement portion. If the set member comprises the single pin, the single pin includes an operation piece, and insertion pieces provided at the respective ends of the operation piece such that the set member has the shape of a Japanese character 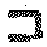 in plan view, the insertion pieces being configured to be fitted to and removed from the respective two engagement portions.

The engagement portion, which is configured such that the set member can be fitted to and removed from the engagement portion, and can keep the elastic members compressed with the set member fitted to the engagement portion, may be provided between the opposed surfaces of the pivot arm and the friction wheel. In this case, the set member comprises a square pillar-shaped set piece.

In order to achieve the above third object, preferably, the friction wheel assembly further comprises: a porous metal film arranged on an outer diameter surface of the friction wheel; and a friction material layer arranged on the metal film, and made of a material softer than the friction wheel, which is capable of coming into contact with the driving wheel and the driven wheel.

By forming such a metal film on the outer diameter surface of the friction wheel as described above, it is possible to prevent the occurrence of rust in the friction wheel even under the environment in which water might be applied to the friction wheel, and thus to extend the service life of the friction wheel. Also, by using such a porous metal film, it is possible to partially wedge the friction material layer into the porous metal film, and thus to keep the friction material layer in closer contact with the metal film. As a result thereof, it is possible to stabilize the friction-based transmission of motive power from the driving wheel to the driven wheel through the friction wheel assembly. The term "porous" used herein means the state in which a single molecule or a plurality of molecules define gaps when laminated in the form of flakes.

Preferably, the metal film comprises a zinc film. By using such a zinc film, it is possible to reliably protect the substrate (the friction wheel), and thus to prevent the occurrence of rust in the friction wheel for a long period of time.

The present invention also provides a method for manufacturing a friction wheel assembly comprising a friction wheel configured to come into frictional contact with an outer diameter surface of a driving wheel and an outer diameter surface of a driven wheel such that rotation of the driving wheel is transmitted to the driven wheel through the friction wheel, the method comprising the steps of: bringing particles including a metal or including an alloy containing the metal into collision with an outer diameter surface of the friction wheel, through which motive power can be transmitted from the driving wheel to the driven wheel, thereby forming a metal film including the metal on the outer diameter surface of the friction wheel; and placing an elastic material which has been heated and melted on a surface of the metal film, and thereafter hardening the elastic material, thereby forming, on the surface of the metal film, a friction material layer comprising the hardened elastic material, and capable of coming into contact with the driving wheel and the driven wheel.

By bringing particles including a metal or including an alloy containing the metal into collision with the outer diameter surface of the friction wheel as described in the above method, a porous metal film is formed on the outer diameter surface of the friction wheel. Since this metal film is a porous film, it is possible to alleviate the stress (thermal stress or stress caused by the thermal expansion and contraction of elastic material) generated when an elastic material which has been heated and melted is placed on the surface of the metal film such that the friction material layer is formed thereon. Therefore, it is possible to prevent the metal film from separating from the outer diameter surface of the friction wheel due to the stress generated when the friction material layer is formed. Furthermore, since the friction material layer is partially wedged into the porous metal film, it is possible to keep the friction material layer in closer contact with the metal film.

Furthermore, due to the peening effect when particles collide with the outer diameter surface of the friction wheel, it is possible to harden the outer diameter surface of the friction wheel, and thus to increase the mechanical strength thereof.

Preferably, in the above method, the metal comprises zinc, and the metal film comprises a zinc film. As described above, by using a zinc film, it is possible to reliably protect the substrate (the friction wheel), and thus to prevent the occurrence of rust in the friction wheel for a long period of time.

### EFFECTS OF THE INVENTION

According to the present invention, as described above, if the contact pressure of the friction wheel against the driving wheel differs from the contact pressure thereof against the driven wheel, the moment load about the arm supporting shaft is applied to the bracket until the contact pressure of the friction wheel against the driving wheel becomes equal to the contact pressure thereof against the driven wheel. As a result thereof, it is possible to stably transmit motive power from the driving wheel to the driven wheel due to the friction between the friction wheel and the driving wheel and between the friction wheel and the driven wheel.

Also, since the friction wheel assembly has a simple structure, i.e., is configured such that the bracket is supported to be slidable along the pair of guide rods, which are supported by the respective ends of the pivot arm, the friction wheel is rotatably supported by the other end of the bracket, and the elastic members are supported by the respective guide rods, the number of the components of the friction wheel assembly is small. Furthermore, since the friction wheel assembly can be mounted by bringing the friction wheel into contact with the driving wheel and the driven wheel, elastically deforming the elastic members due to the movement of the pivot arm relative to the bracket, and fixing the arm supporting shaft, which supports the pivot arm, to the object for supporting the friction wheel assembly, it is possible to easily mount the friction wheel assembly in position.

Furthermore, since, as described above, the elastic members are elastically deformed by pushing the friction wheel toward the pivot arm, and the friction wheel can be kept at the position where the elastic members are fully compressed by fitting the set member(s) to the engagement portion(s), when the friction wheel assembly is mounted between the driving wheel and the driven wheel, it is not necessary to hold the friction wheel at this position by fingers. Therefore, it is possible to easily mount the friction wheel assembly in position.

Furthermore, since when the set member(s) is removed from the engagement portion(s) after the friction wheel assembly is mounted in position, due to the pressing forces of the elastic members, the friction wheel can uniformly come into contact with the driving wheel and the driven wheel, it is possible to stably transmit motive power from the driving wheel to the driven wheel due to the friction between the friction wheel and the driving wheel and between the friction wheel and the driven wheel.

Furthermore, since the pivot arm, which is pivotable about the arm supporting shaft, the bracket, which is movable toward the pivot arm, and the elastic members, which bias the bracket in the direction away from the pivot arm such that the friction wheel is uniformly brought into contact with the driving wheel and the driven wheel, are received in the friction wheel, it suffices to secure only the space between the driving and driven wheels for mounting the friction wheel assembly, thus making it possible to make the power transmission device small-sized.

Furthermore, since the friction wheel assembly is configured as described above, it is possible to keep the metal film and the friction material layer in closer contact with the friction wheel and the metal film, respectively, and thus to stabilize the friction-based transmission of motive power from the driving wheel to the driven wheel through the friction wheel assembly. Also, it is possible to prevent the occurrence of rust in the friction wheel even under the environment in which water might be applied to the friction wheel, and thus to extend the service life of the friction wheel.

Furthermore, since the method for manufacturing the friction wheel assembly is configured as described above, it is possible to prevent the metal film from separating from the friction wheel due to the stress (thermal stress or stress caused by the thermal expansion and contraction of elastic material) generated when the friction material layer is formed, and to keep the friction material layer in closer contact with the metal film. Therefore, it is possible to transmit motive power in a stable manner, and thus to extend the service life of the friction wheel.

### BRIEF DESCRIPTION OF THE DRAWINGS

Fig. 1 is a schematic view of a power transmission device in which a friction wheel assembly according to a first embodiment of the present invention is used.
Fig. 2 is a vertical sectional view of the friction wheel assembly illustrated in Fig. 1.
Fig. 3 is a sectional view taken along line III-III of Fig. 2.
Fig. 4 is a sectional view illustrating a variation of the friction wheel assembly illustrated in Fig. 3.
Fig. 5 is a schematic view of a power transmission device in which a friction wheel assembly according to a second embodiment of the present invention is used.
Fig. 6 is a vertical sectional view of the friction wheel assembly illustrated in Fig. 5.
Fig. 7 is a sectional view taken along line VII-VII of Fig. 6.
Fig. 8 is a sectional view illustrating a variation of the friction wheel assembly illustrated in Fig. 7.
Fig. 9 is a schematic view of a power transmission device in which a friction wheel assembly according to a third embodiment of the present invention is used.
Fig. 10 is a sectional view taken along line X-X of Fig. 9.
Fig. 11 is a sectional view taken along line XI-XI of Fig. 10.
Fig. 12 is a partially cutaway sectional view in which a portion of Fig. 11 is enlarged.
Fig. 13 is a sectional view taken along line XIII-XIII of Fig. 12.
Fig. 14 is a sectional view illustrating different set members
Fig. 15 is a partially cutaway front view illustrating a still different set member.
Fig. 16 is a sectional view taken along line XVI-XVI of Fig. 15.
Fig. 17 is a partially cutaway front view illustrating still different set members.
Fig. 18 is a partially cutaway front view illustrating a still different set member.
Fig. 19 is a sectional view taken along line XIX-XIX of Fig. 18.
Fig. 20 is a front view illustrating the state in which the friction wheel is displaced to a contact position.

### BEST MODE FOR CARRYING OUT THE INVENTION

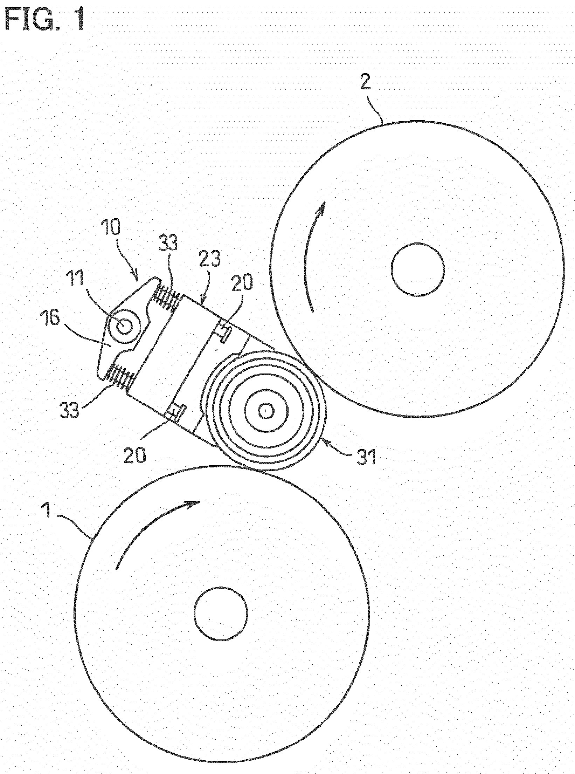

The friction wheel assembly 10 of the first embodiment of the present invention is now described with reference to the drawings. Fig. 1 is a schematic view of a power transmission device including a driving wheel 1, a driven wheel 2, and the friction wheel assembly 10 mounted between the opposed portions of the driving wheel 1 and the driven wheel 2 such that the rotation of the driving wheel 1 is transmitted to the driven wheel 2 through the friction wheel assembly 10.

In this power transmission device, which is used to drive accessories of an engine on which a starter/generator is mounted, the driving wheel 1 is a crankshaft pulley of the engine, while the driven wheel 2 is a friction wheel mounted to the rotary shaft of a water pump, i.e., one of the engine accessories. However, the driving wheel 1 and the driven wheel 2 are not limited, respectively, to the crankshaft pulley and a friction wheel mounted to the rotary shaft of an engine accessory.

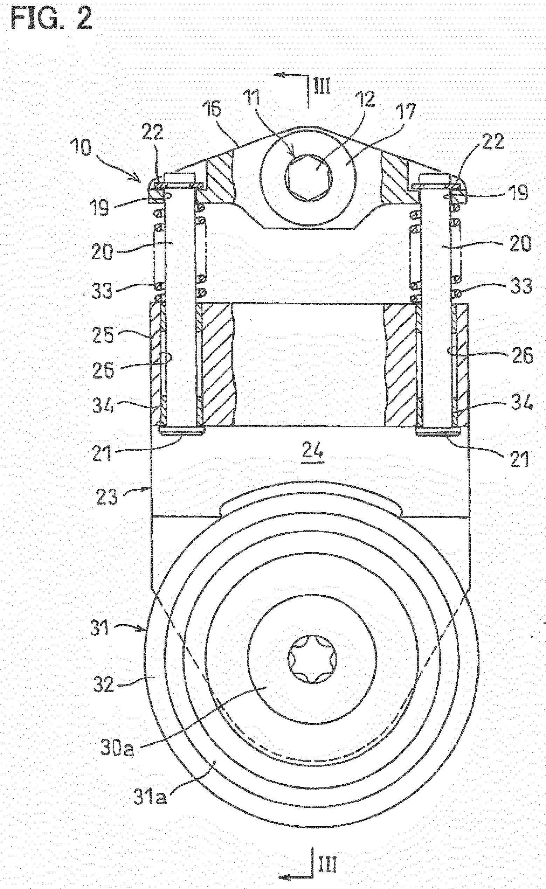

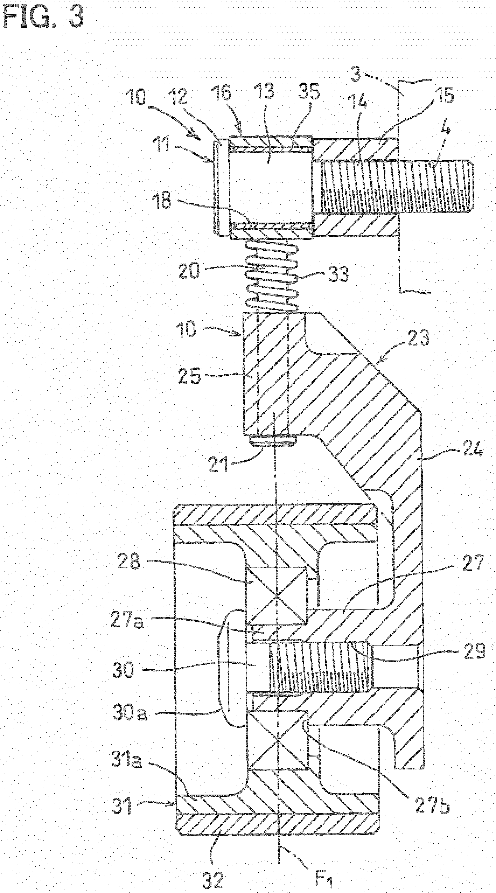

As illustrated in Figs. 2 and 3, the friction wheel assembly 10 includes an arm supporting shaft 11 mounted to an engine block 3, as an object for supporting the friction wheel assembly 10; a pivot arm 16 pivotally supported by the arm supporting shaft 11; a pair of guide rods 20 supported by the respective ends of the pivot arm 16 to extend in parallel to each other; a bracket 23 slidably supported by the guide rods 20; a friction wheel 31 rotatably supported by the bracket 23; and elastic members 33 biasing the bracket 23 in the direction in which the friction wheel 31 comes into elastic contact with the driving and driven wheels 1 and 2 illustrated in Fig. 1.

The arm supporting shaft 11 includes a straight shaft portion 13 having a head 12 at its rear end, and a small-diameter threaded shaft portion 14 provided at the distal end of the straight shaft portion 13. The arm supporting shaft 11 is mounted to the engine block 3 by screwing the threaded shaft portion 14 into the engine block 3, with a collar 15 fitted on the threaded shaft portion 14 such that the collar 15 is sandwiched by the straight shaft portion 13 and the engine block 3 at the respective axial ends of the collar 15.

The pivot arm 16 includes a boss portion 17 at the central portion thereof between both ends of the pivot arm 16. The boss portion 17 is shorter in axial length than the collar 15. The straight shaft portion 13 of the arm supporting shaft 11 is inserted through a shaft inserting hole 18 formed in the pivot arm 16 so as to extend along the center axis of the boss portion 17, so that the pivot arm 16 is supported to be pivotable about the straight shaft portion 13. In order to smoothly pivot the pivot arm 16, a sliding bearing 35 is mounted in the shaft inserting hole 18.

Rod inserting holes 19 are formed in the respective ends of the pivot arm 16 so as to be equidistantly spaced apart from the center axis of the boss portion 17.

Each guide rod 20 includes a flange 21 at one end thereof. The other end of each guide rod 20 is inserted, with the flange 21 directed downwardly, through the corresponding one of the rod inserting holes 19, which are formed in the respective ends of the pivot arm 16. A snap ring 22 is attached to the portion of the other end of the guide rod 20 protruding upwardly from the rod inserting hole 19, thereby preventing the separation of the guide rod 20.

The bracket 23 includes a flat plate 24, and a supporting piece 25 extending laterally from one end of the flat plate 24, so that the bracket 23 is L-shaped as seen from one side thereof.. The supporting piece 25 is provided, in the respective ends thereof, with guide holes 26 extending through the supporting piece 25 from the top to bottom surface of the piece 25. The guide rods 20 are inserted in the respective guide holes 26 so as to slidably support the bracket 23. In order to smoothly slide the bracket 23, sliding bearings 34 are mounted in the respective guide holes 26.

The bracket 23 further includes a wheel supporting shaft 27 at the other end, i.e., the lower end, of the bracket 23. The wheel supporting shaft 27 extends in the same direction in which the supporting piece 25 extends, and has a center axis extending in parallel to the arm supporting shaft 11.

The wheel supporting shaft 27 is a stepped shaft including a small-diameter shaft portion 27a at its distal end. A rolling bearing 28 is fitted on the small-diameter shaft portion 27a, and the friction wheel 31 is rotatably supported on the small-diameter shaft portion 27a through the rolling bearing 28.

The wheel supporting shaft 27 includes a threaded hole 29 which is open to the distal end surface of the shaft 27. A bolt 30 is screwed into the threaded hole 29 such that the rolling bearing 28 is axially positioned by the head 30a of the bolt 30 and the axial end surface 27b of the wheel supporting shaft 27 at the root of the small-diameter shaft portion 27a.

The friction wheel 31 includes a wheel body 31a provided, on the outer periphery of the wheel body 31a, with a friction material layer 32 having a high friction coefficient. The friction wheel 31 is configured, and mounted in position, such that the imaginary plane F1 which bisects the axial width of the friction wheel 31, and which intersects the center axis of the wheel supporting shaft 27 at right angles, coincides with the imaginary plane containing the center axes of the guide rods 20, and such that the center of gravity of the friction wheel 31 is located on the imaginary plane F1, thereby preventing the tilt of the friction wheel 31.

The elastic members 33 comprise coil springs supported by the respective guide rods 20, and arranged between the pivot arm 16 and the bracket 23 so as to bias the bracket 23 in the direction away from the pivot arm 16.

In order to mount the friction wheel assembly 10 in the power transmission device configured as described above, with the friction wheel assembly 10 arranged on one side of the straight line connecting the centers of the driving and driven wheels 1 and 2, the friction wheel 31 is brought into contact with the outer diameter surfaces of the driving and driven wheels 1 and 2 such that the center axes of the guide rods 20 intersect with the above straight line, which connects the centers of the wheels 1 and 2. Thereafter, the pivot arm 16 is pushed in, i.e., moved toward the pivot arm 16, while compressing the elastic members 33, until the arm supporting shaft 11 inserted in the shaft inserting hole 18 of the pivot arm 16 is aligned with a threaded hole 4 formed in the engine block 3 beforehand. In this state, the threaded shaft portion 14 of the arm supporting shaft 11 is screwed into the threaded hole 4 so that the pivot arm 16 is mounted in position.

By mounting the friction wheel assembly 10 in this way, the elastic restoring forces of the elastic members 33 keep the friction wheel 31 in elastic contact with the outer diameter surfaces of the driving and driven wheels 1 and 2.

When the friction wheel 31 comes into elastic contact with the driving wheel 1 and the driven wheel 2, if the contact pressure of the friction wheel 31 against the driving wheel 1 differs from the contact pressure thereof against the driven wheel 2, due to the reaction force applied to the friction wheel 31 from one of the driving and driven wheels 1 and 2 against which the contact pressure is higher, a moment load is applied to the bracket 23 such that the pivot arm 16 and the bracket 23 pivot about the arm supporting shaft 11 until the contact pressure of the friction wheel 31 against the driving wheel 1 becomes equal to the contact pressure thereof against the driven wheel 2. Therefore, it is possible to stably transmit motive power from the driving wheel 1 to the driven wheel 2 through the friction wheel 31 due to the friction between the friction wheel 31 and the driving wheel and between the friction wheel 31 and the driven wheel.

Since, as illustrated in the embodiment, the center of gravity of the friction wheel assembly 10 is located on the imaginary plane F1 which bisects the axial width of the friction wheel 31 while intersecting at right angles with the center axis of the wheel supporting shaft 27, which rotatably supports the friction wheel 31, a rotation moment that could cause the friction wheel 31 to tilt is never applied to the friction wheel assembly 10, so that it is possible to stably keep the friction wheel 31 in contact with both the driving wheel 1 and the driven wheel 2.

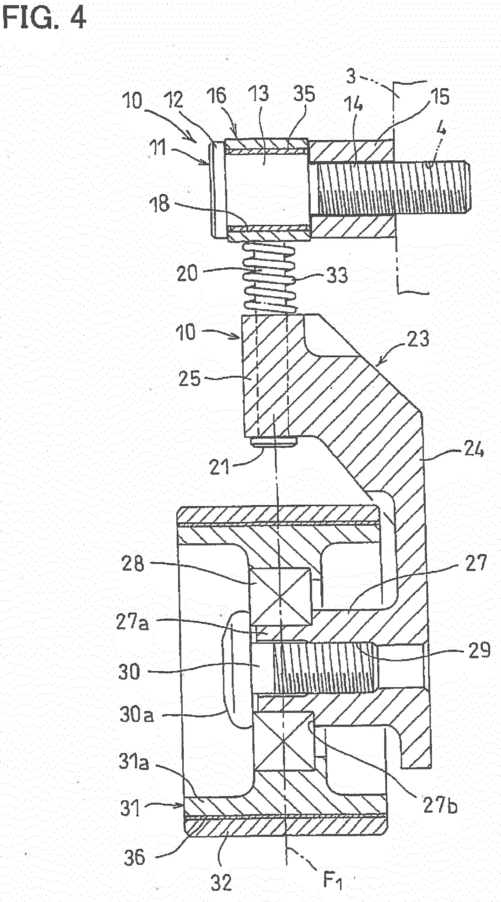

Fig. 4 illustrates a variation of the friction wheel assembly 10 illustrated in Fig. 3. The friction wheel assembly 10 of Fig. 4 further includes a porous zinc film formed, as a metal film 36, on the outer periphery of the friction wheel 31 (hereinafter the same reference number "36" is used with respect to both the metal film and the porous zinc film). The term "porous" used herein means the state in which a single molecule or a plurality of molecules define gaps when laminated in the form of flakes. In Fig. 4, in order to make it easier to see the metal film 36, the thickness of the metal film 36 is shown exaggeratedly to be larger than the actual size.

By forming the zinc film 36 in this way, it is possible to prevent the occurrence of rust in the friction wheel 31 even under the environment in which water might be applied to the friction wheel 31, and thus to extend the service life of the friction wheel assembly 10. The zinc film 36 comprises either a film made of only zinc or a film made of an alloy containing zinc and a different metal(s). While the zinc film 36, which is capable of reliably protecting the friction wheel 31, is used as the metal film 36 in this variation, a different metal film 36 capable of preventing corrosion may be used instead of the zinc film 36.

The friction material layer 32 may be made of e.g., rubber, and is mounted in close contact with the surface of the zinc film 2a. By partially wedging the friction material layer 32 into the porous zinc film 36, it is possible to keep the friction material layer 32 in closer contact with the zinc film 36.

While the friction material layer 32 is made of rubber in this variation, the friction material layer 32 may be made of another material, such as resin softer than the friction wheel 31. If the friction material layer 32 is softer than the friction wheel 31, it is possible to keep the friction material layer 32 in closer contact with the driving wheel 1 and the driven wheel 2, and thus to smoothly transmit motive power from the driving wheel 1 to the driven wheel 2 through the friction wheel 31.

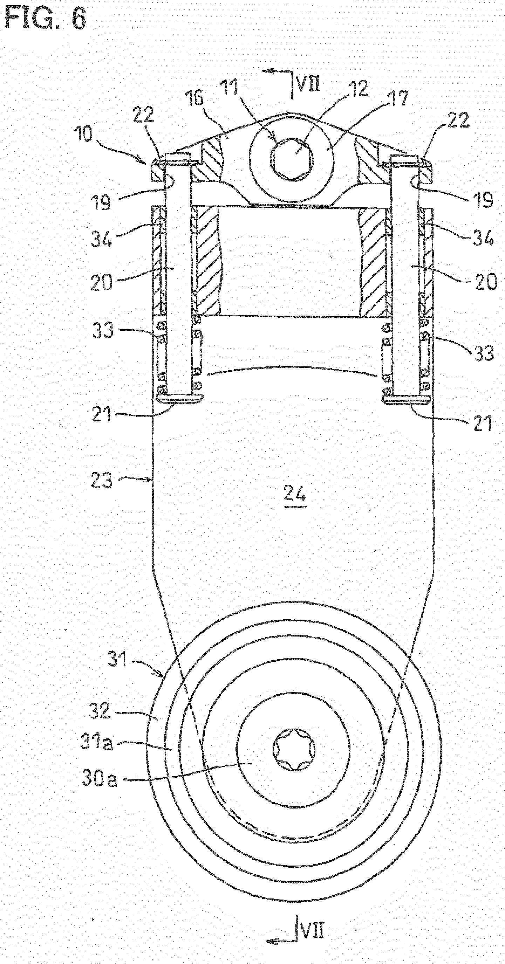

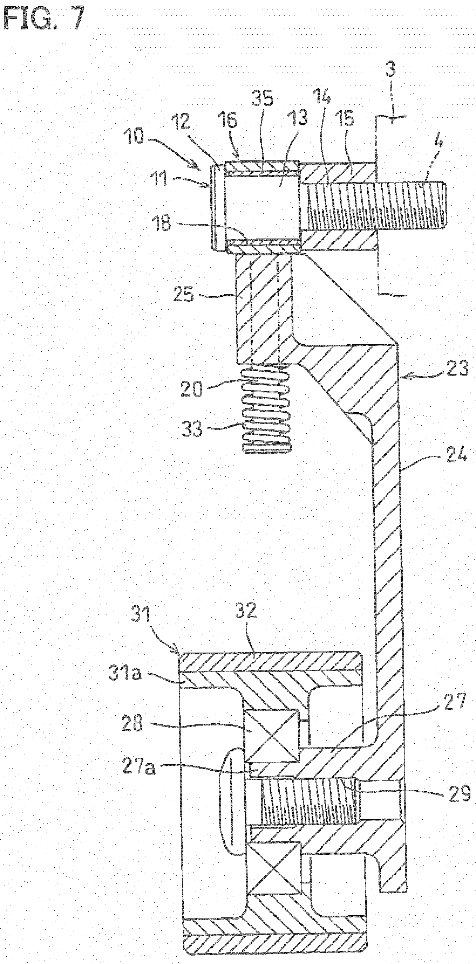

The second embodiment of the present invention is now described with reference to the drawings. While, in Figs. 2 and 3, the elastic members 33, which are supported by the respective guide rods 20, bias the bracket 23 in the direction away from the pivot arm 16, the elastic members 33 may be, as illustrated in Figs. 6 and 7, mounted between the opposed portions of the supporting piece 25 of the bracket 23 and the flanges 21 of the respective guide rods 20, thereby biasing the bracket 23 toward the pivot arm 16.

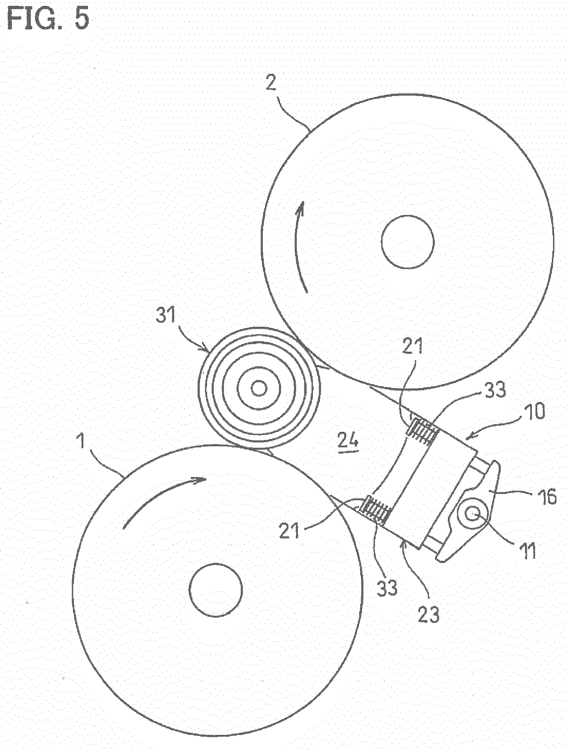

In order to mount the friction wheel assembly 10 of Figs. 6 and 7 in position, as illustrated in Fig. 5, the friction wheel assembly 10 is positioned such that the friction wheel 31 is in contact with both the driving wheel 1 and the driven wheel 2 on one side of the straight line connecting the centers of the driving and driven wheels 1 and 2, with the pivot arm 16 arranged on the other side of the straight line, and a pulling force is applied to the pivot arm 16 to compress the elastic members 33. In this state, the arm supporting shaft 11 which is inserted in the shaft inserting hole 18 of the pivot arm 16 is threadedly engaged in a threaded hole 4 formed in the engine block 3.

With the friction wheel assembly 10 mounted in this way, if the contact pressure of the friction wheel 31 against the driving wheel 1 differs from the contact pressure thereof against the driven wheel 2, in the same manner as in Fig. 1, due to the reaction force applied to the friction wheel 31 from one of the driving and driven wheels 1 and 2 against which the contact pressure is higher, a moment load is applied to the bracket 23 such that the pivot arm 16 and the bracket 23 pivot about the arm supporting shaft 11 until the contact pressure of the friction wheel 31 against the driving wheel 1 becomes equal to the contact pressure thereof against the driven wheel 2.

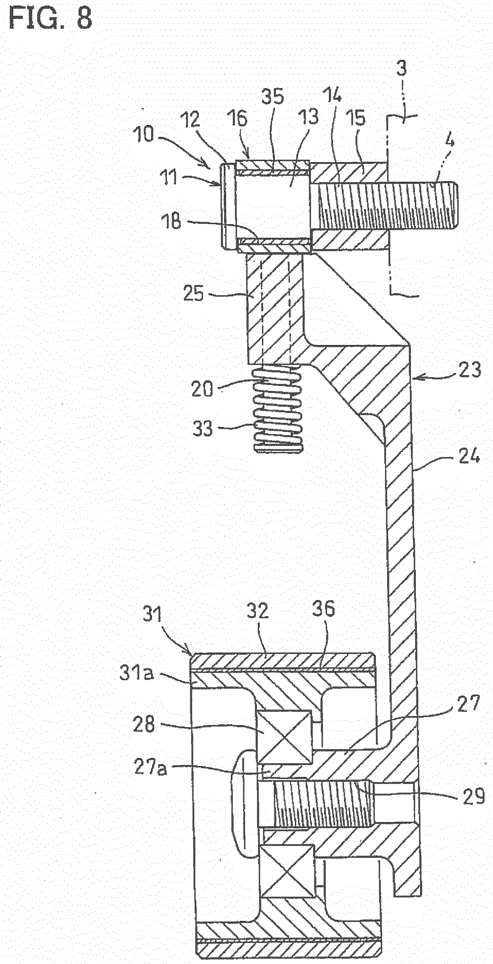

Fig. 8 illustrates a variation of the friction wheel assembly 10 illustrated in Fig. 7. The friction wheel assembly 10 of Fig. 8 also includes a porous zinc film 36 formed, as a metal film 36, on the outer periphery of the friction wheel 31. As in Fig. 4, by forming the zinc film 36 in the friction wheel assembly 10 of Fig. 8, it is possible to prevent the occurrence of rust in the friction wheel 31 even under the environment in which water might be applied to the friction wheel 31, and thus to extend the service life of the friction wheel assembly 10.

A method for manufacturing the friction wheel assembly 10 of Figs. 4 and 8, which is formed with the metal film 36, is now described. In this method, first, particles including a metal or including an alloy containing this metal are brought into collision with the outer diameter surface of the wheel body 31a. The above particles comprise powdered alloy of zinc, aluminum, and magnesium, the powdered alloy being arranged around the spherical iron nuclei of the respective particles (i.e., "Z iron" made by .Emanak Nishinihon Co., Ltd. is used.)

When the particles are brought into collision with the outer diameter surface of the wheel body 31a at a high speed, an alloy of zinc and a different metal(s) on the surfaces of the particles adheres to the outer diameter surface of the wheel body 31a, thereby forming a zinc film 36 having a predetermined thickness (film made of an alloy containing zinc as a main ingredient). The zinc film 36 is a porous film in which an alloy of zinc and a different metal(s) is laminated in the form of flakes. While the above particles are used as an example, different kinds of particles may be used, if the metal film 36 made of such different particles can prevent the corrosion of the outer diameter surface of the wheel body 31.

Second, after placing the wheel body 31a into a mold, the wheel body 31a is preheated, and high-temperature rubber which has been heated and melted is poured into the mold. Thereafter, the rubber is cooled and hardened, so that the friction material layer 32, comprising the hardened rubber, is formed on the surface of the zinc film 36.

Since the zinc film 36 is a porous film as described above, it is possible to alleviate the stress (thermal stress or stress caused by the thermal expansion and contraction of rubber) generated when rubber which has been heated and melted is placed on the surface of the zinc film 36 such that the friction material layer 32 is formed thereon. Therefore, it is possible to prevent the zinc film 36 from separating from the outer diameter surface of the wheel body 31a due to the stress generated when the friction material layer 32 is formed. Furthermore, since the friction material layer 32 is partially wedged into the porous zinc film 36, it is possible to keep the friction material layer 32 in closer contact with the zinc film 36.

Furthermore, due to the peening effect when particles collide with the outer diameter surface of the wheel body 31a, it is possible to harden the outer diameter surface of the wheel body 31a, and thus to increase the mechanical strength thereof.

The friction wheel assembly 10 according to either of the above embodiments and the method for manufacturing the friction wheel assembly 10 are a mere example, and the shape and arrangement of each component thereof, as well as its manufacturing steps. may be altered, provided that an object of the present invention can be achieved, i.e., that it is possible to extend the service life of the friction wheel assembly 10, and to stably transmit motive power from the driving wheel 1 to the driven wheel 2 by the friction between the friction wheel and the respective wheels 1 and 2.

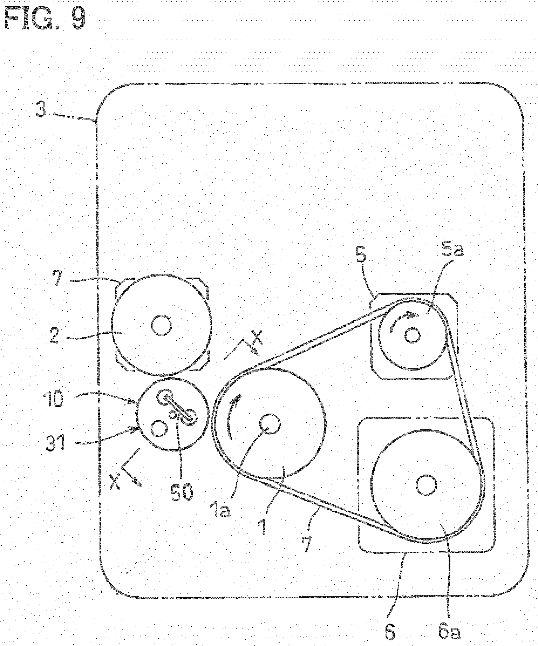

The third embodiment of the present invention is now described with reference to the drawings. Fig. 9 illustrates a power transmission device for driving accessories of an engine on which a starter/generator 5 is mounted. This power transmission device includes a crankshaft pulley 1 mounted, as a driving wheel, to a crankshaft 1a (the crankshaft pulley 1 is hereinafter referred to as the driving wheel 1); a starter/generator wheel 5a mounted to the starter/generator 5; a compressor wheel 6a mounted to the rotary shaft of the compressor 6 of an air-conditioner; and a belt 7 trained around these wheels 1, 5a and 6a. The power transmission device is configured such that while the engine is running normally, with the driving wheel 1 rotating in the direction of the shown arrow, the starter/generator 5 and the compressor 6 are driven, so that the starter/generator 5 is used as a generator.

The power transmission device is further configured such that the starter/generator 5 can be used as an engine starter. In particular, by driving the starter/generator 5, and thus rotating the starter/generator wheel 5a in the direction of the shown arrow, the driving wheel 1 is rotated, and the engine is started.

The power transmission device further includes an engine accessory wheel 2 mounted, as a driven wheel, to the rotary shaft of a water pump 7 as an engine accessory so as to be arranged in the vicinity of the driving wheel 1 (the engine accessory wheel 2 is hereinafter referred to as the driven wheel 2); and a friction wheel assembly 10 including a friction wheel 31, and arranged on one side of the space between the opposed portions of the driving and driven wheels 1 and 2. The friction wheel assembly 10 is capable of being selectively brought into and out of contact with the driving and driven wheels 1 and 2 such that when the friction wheel 31 of the friction wheel assembly 10 is in contact with both the driving wheel 1 and the driven wheel 2, the friction wheel 31 is rotated by the driving wheel 1, thereby transmitting motive power from the driving wheel 1 to the driven wheel 2.

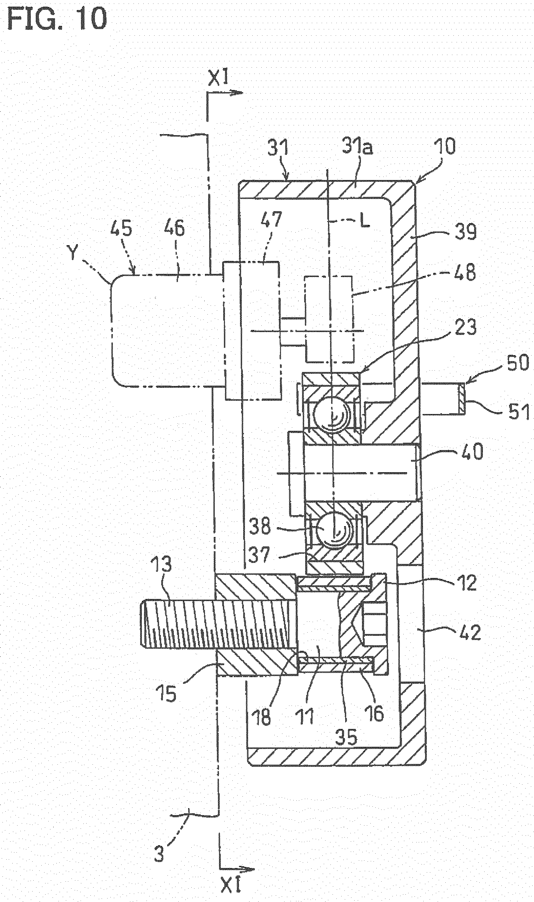

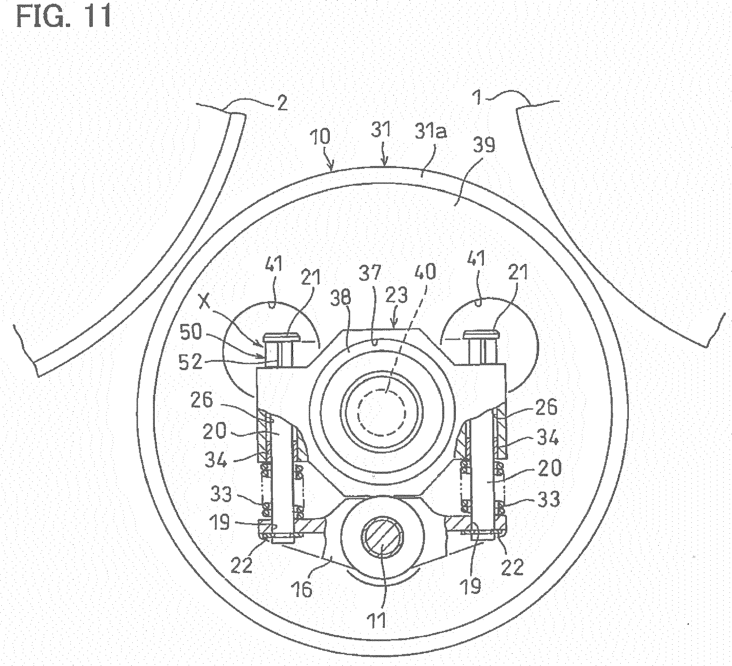

As illustrated in Figs. 10 and 11, the friction wheel assembly 10 includes an arm supporting shaft 11 mounted to an engine block 3 such that the friction wheel assembly 10 is supported by the engine block 3; and a pivot arm 16 supported to be pivotable about the arm supporting shaft 11.

The arm supporting shaft 11 includes a head 12, and a small-diameter threaded shaft portion 13 provided at the distal end of the shaft 11. The arm supporting shaft 11 is mounted to the engine block 3 by screwing the threaded shaft portion 13 into the engine block 3, with a collar 15 fitted on the threaded shaft portion 13, between the distal end of the arm supporting shaft 11 and the engine block 3.

The pivot arm 16 is provided with a shaft inserting hole 18 at the central portion thereof, between both ends of the pivot arm 16. A sliding bearing 35 is inserted in the shaft inserting hole 18, and the arm supporting shaft 11 is inserted in the sliding bearing 35, so that the pivot arm 16 is supported to be pivotable about the arm supporting shaft 11.

Rod inserting holes 19 are formed in the respective ends of the pivot arm 16 so as to be equidistantly spaced apart from the arm supporting shaft 11. A pair of guide rods 20 are inserted at one end thereofthrough the respective rod inserting holes 19 to extend parallel to each other. A snap ring 22 is attached to the portion of the one end of the guide rod 20 protruding from the corresponding rod inserting hole 19, thereby preventing the separation of the guide rod 20.

A bracket 23 is arranged over the pivot arm 16 so as to be opposed to the pivot arm 16, and is formed with a pair of guide holes 26 in the respective ends of the bracket 23. The guide rods 20 are inserted through the respective guide holes 26 so as to slidably support the bracket 23.

The bracket 23 is slidably supported by sliding bearings 34mounted between both ends of the guide holes 26 and the respective guide rods 20 so that the bracket 23 is smoothly slidable.

The friction wheel assembly 10 further includes elastic members 33 comprising coil springs mounted around the respective guide rods 20 between the opposed ends of the pivot arm 16 and the bracket 23, and biasing the bracket 23 toward flanges 21 provided, as anti-separation portions 21, at the other ends of the guide rods 20.

The bracket 23 is provided with a bearing fitting hole 37 in the central portion of the bracket 23 between the guide holes 26. A rolling bearing 38 is fitted in the bearing fitting hole 37 so as to rotatably support the friction wheel 31. The rolling bearing 38 comprises a sealed ball bearing in this embodiment, but is not limited thereto.

The friction wheel 31 includes a circular wheel body 31a provided on its outer peripheral portion, and capable of being brought into and out of contact with the driving and driven wheels 1 and 2 illustrated in Fig. 9; and a disk portion 39 provided inside of one end of the wheel body 31a. A wheel shaft 40 is inserted in the central portion of the disk portion 39, and is rotatably supported by the rolling bearing 38. With the wheel shaft 40 supported in this way, the pivot arm 16 and the bracket 23 are received in the wheel body 31a.

In view of the entire weight balance, the disk portion 39 of the friction wheel 31 may be provided at any position axially displaced from the one end of the wheel body 31a toward the widthwise center of the wheel body 31a.

If an unbalanced load is applied to the rolling bearing 38 from the friction wheel 31, the rolling bearing 38 tends to be damaged. In order to avoid this problem, as illustrated in Fig. 10, the rolling bearing 38 and the friction wheel 31 are arranged such that the former supports the latter with the widthwise center line L of the friction wheel 31 coinciding with the widthwise center line of the rolling bearing 38.

As illustrated in Figs. 10 and 11, each guide rod 20 includes an engagement portion X between the opposed portions of the bracket 23 and the flange 21 at the other end of the guide rod 20. The engagement portions X are configured such that a set member 50 can be removably fitted to the engagement portions X by pushing the friction wheel 31 in the direction in which the bracket 23 moves toward the pivot arm 16, while compressing the elastic members 33. With the set member 50 fitted to the engagement portions X, the friction wheel 31 is kept in the position in which the bracket 23 is located close to the pivot arm 16.

The set member 50 is a strip-shaped plate including an operation piece 51, and a pair of insertion pieces 52 provided at the respective ends of the operation piece 51 by bending the strip-shaped plate such that the set member 50 has the shape of the Japanese character " 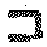 " in plan view. The insertion pieces 52 can be fitted to and removed from the respective engagement portions X between the bracket 23 and the flanges 21. By fitting the insertion pieces 52 to the respective engagement portions X, the bracket 23 is kept in the position displaced toward the pivot arm 16.

The set member 50 is fitted to the engagement portions X such that the insertion pieces 52 sandwich the guide rods 20. The insertion pieces 52 have, at their respective distal ends, semicircular bent portions 53 fitted around the guide rods 20 when the set member 50 is fitted to the engagement portions X.

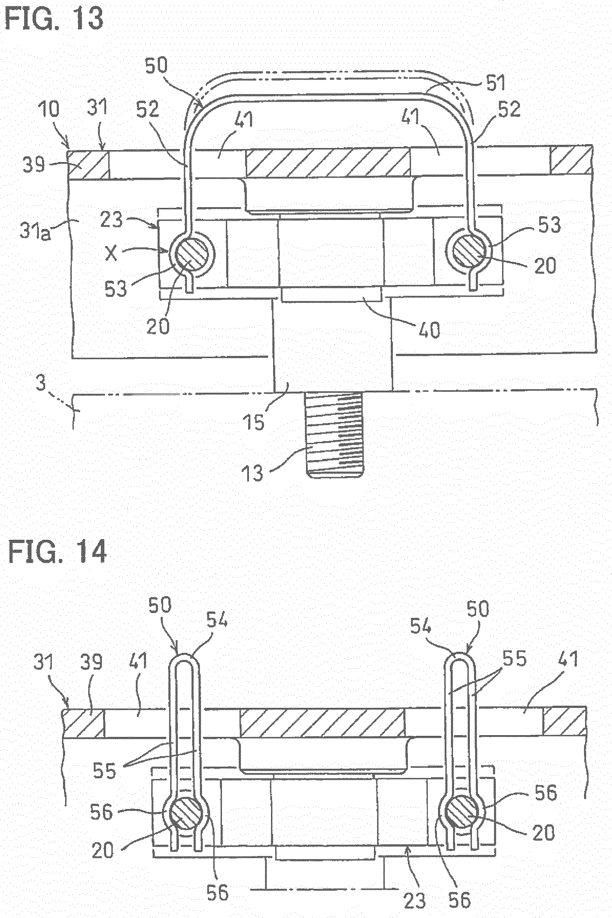

The insertion pieces 52 of the set member 50 can be fitted to and removed from the respective engagement portions X by being passed through a pair of openings 41 (see Fig. 13) formed in the disk portion 39 of the friction wheel 31. As illustrated in Fig. 10, the disk portion 39 is further formed with a tool inserting hole 42 opposed to the head 12 of the arm supporting shaft 11.

In the power transmission device configured as described above, the friction wheel assembly 10 is mounted with the insertion pieces 52 of the set member 50 fitted to the respective engagement portions X of the guide rods 20 as illustrated in Figs. 11 to 13.

In order to fit the set member 50 to the engagement portions X, a portion of the outer periphery of the friction wheel 31 is pushed such that the bracket 23 moves toward the pivot arm 16 against the elastic forces of the elastic members 33. Thereafter, with the engagement portions X exposed between the bracket 23 and the flanges 21, the insertion pieces 52 of the set member 50 are inserted through the openings 41 of the disk portion 39 of the friction wheel 31, and fitted between the bracket 23 and the flanges 21.

By fitting the set member 50 in this way, the elastic members 33 are kept compressed, and even when the force pushing the friction wheel 31 is released, the friction wheel 31 is still kept at the position where the elastic members 33 are fully compressed.

With the friction wheel 31 kept at the position where the elastic members 33 are fully compressed, the friction wheel assembly 10 is placed on one side of the space between the opposed portions of the driving and driven wheels 1 and 2 illustrated in Fig. 9, and the threaded shaft portion 13 of the arm supporting shaft 11 (see Fig. 10) is screwed into and threadedly engaged in the engine block 3, thereby mounting the friction wheel assembly 10 in position.

When the friction wheel assembly 10 is mounted as described above, since the friction wheel 31 is kept at the position where the elastic members 33 are fully compressed by the insertion pieces 52 of the set member 50 fitted to the respective engagement portions X, it is not necessary to hold the friction wheel 31 at this position by fingers. Therefore, it is possible to very easily mount the friction wheel assembly 10 in position.

Since, with the set member 50 fitted to the engagement portions X, the bent portions 53 at the distal ends of the insertion pieces 52 are engaged with the respective guide rods 20 as illustrated in Fig. 13, it is possible to keep the set member 50 fitted to the engagement portions X in a stable manner. As a result thereof, it is possible to prevent the separation of the set member 50 when mounting the friction wheel assembly 10, and thus to smoothly mount the friction wheel assembly 10 in position.

Figs. 9 to 13 illustrate the state in which the friction wheel assembly 10 is mounted in position. When the set member 50 is removed from the engagement portions X after the friction wheel assembly 10 is mounted in position, the elastic restoring forces of the elastic members 33 move the bracket 23 along the guide rods 20 in the direction away from the pivot arm 16 until the friction wheel 31 comes into elastic contact with the driving wheel 1 and the driven wheel 2.

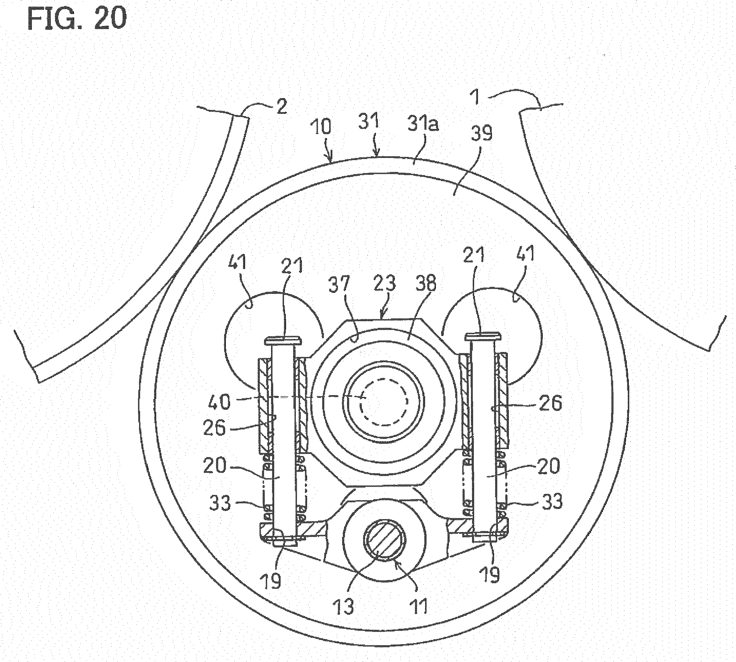

When the friction wheel 31 moves toward the driving and driven wheels 1 and 2 due to the elastic restoring forces of the elastic members 33, if the friction wheel 31 abuts against the outer diameter surface of one of the driving and driven wheels 1 and 2 before it abuts against the outer diameter surface of the other wheel, due to the pressing force of the elastic member 33 remoter from the portion of the friction wheel 31 abutting against the one of the driving and driven wheels 1 and 2, the pivot arm 16 pivots about the arm supporting shaft 11, and thus is displaced to the position corresponding to the positions of the driving and driven wheels 1 and 2, thereby bringing the friction wheel 31 into contact with the other wheel as well. As a result thereof, the friction wheel 31 uniformly comes into elastic contact with both of the driving wheel 1 and the driven wheel 2 as illustrated in Fig. 20.

Since, in this way, the friction wheel 31 uniformly comes into elastic contact with both of the driving wheel 1 and the driven wheel 2 due to the elastic members 33, it is possible to stably transmit motive power from the driving wheel 1 to the driven wheel 2 due to the friction between the friction wheel 31 and the driving wheel 1 and between the friction wheel 31 and the driven wheel 2.

The power transmission device of Fig. 9 includes a displacing device configured to displace the friction wheel 31 to the contact position where the friction wheel 31 is in contact with the driving and driven wheels 1 and 2 to drive the water pump 7 from the engine by transmitting motive power from the driving wheel 1 to the driven wheel 2, and to the separated position where the friction wheel 31 is separated from the driving and driven wheels 1 and 2 when starting the engine by driving the starter/generator 12.

The dashed line Y of Fig. 10 shows an exemplary displacing device 45 configured to displace the friction wheel 31 to the contact position and the separated position. This displacing device 45 includes a motor 46, a speed reducing mechanism 47, and an eccentric cam 48 arranged over the bracket 23, and configured to be driven by the motor 46 through the speed reducing mechanism 47. By rotating the eccentric cam 48 with the eccentric cam 48 in contact with the bracket 23, the friction wheel 31 is displaced between the contact position and the separated position.

In the state of Fig. 10, since the set member 50 keeps the friction wheel 31 in the position where the elastic members 33 are fully compressed, a large gap is defined between the bracket 23 and the eccentric cam 48. When the set member 50 is removed from the friction wheel assembly 10, the eccentric cam 48 comes into contact with the upper surface of the bracket 23, or faces the bracket 23through a minute gap.

While, in Fig. 13, the set member 50 comprises a strip-shaped plate including an operation piece 51, and a pair of insertion pieces 52 provided at the respective ends of the operation piece 51 such that the strip-shaped plate has the shape of the Japanese character " 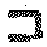 " in plan view, the set member 50 is not limited thereto.

Fig. 14 illustrates different set members 50. Each set member 50 of Fig. 14 is a strip-shaped plate including a U-shaped bent portion 54, and a pair of insertion pieces 55 provided at the respective ends of the bent portion 54, and each having, at the distal end thereof, a semicircular bent portion 56 engageable with the outer periphery of the corresponding guide rod 20, so that the set member 50 has the shape of the letter U in plan view as a whole.

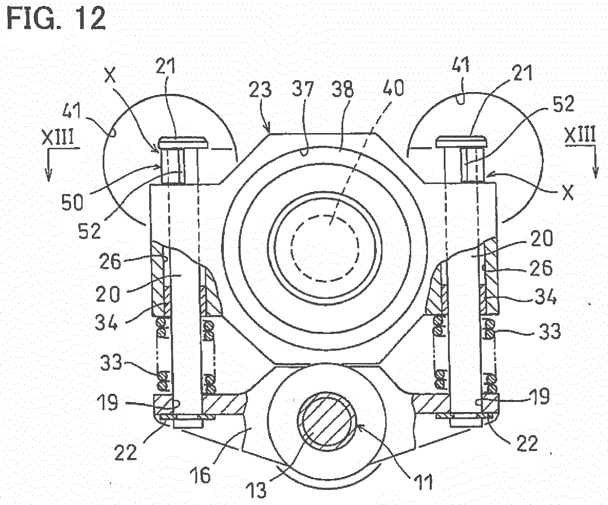

The set members 50 of Fig. 14, configured as described above, can be fitted to and removed from the respective engagement portions X illustrated in Fig. 12 by being passed through the openings 41 of the disk portion 39 of the friction wheel 31. By fitting the set members 50 to the engagement portions X, the bracket 23 is maintained at the position displaced toward the pivot arm 16. When the set members 50 are removed from the engagement portions X, the bracket 23 becomes movable from the above displaced position.

While, in Fig. 12, the engagement portions X are each provided between the opposed portions of the bracket 23 and the flange 21 provided as an anti-separation portion at the other end of each guide rod 20, a different engagement portion or portions X may be provided. If a different engagement portion or portions X are provided, a set member or members 50 suitable for the different engagement portion(s) X is used, and simultaneously an opening or openings 41 are arranged at an appropriate position or positions such that the set member or members 50 can be inserted and removed through the opening or openings 41.

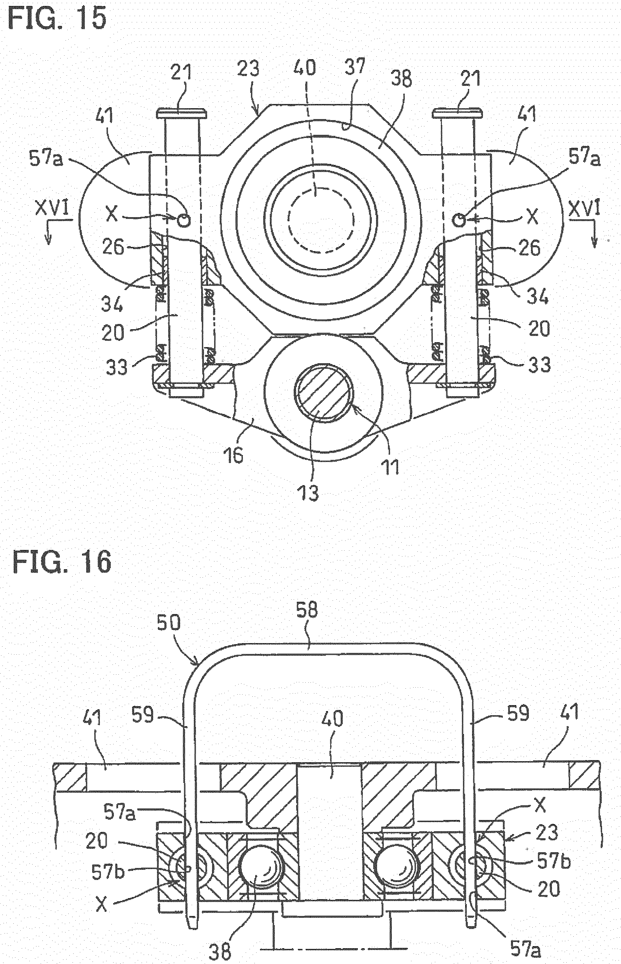

Figs. 15 and 16 illustrate such different engagement portions X. The engagement portions X of Figs. 15 and 16 each comprises communication holes constituted by a set hole 57a extending from the outer periphery of the bracket 23 at one end thereof to the corresponding guide hole 26; and a pin hole 57b formed in the guide rod 20, and the engagement portions X are configured such that the pin holes 57b communicate with the respective set holes 57a when the bracket 23 is pushed toward the pivot arm 16.

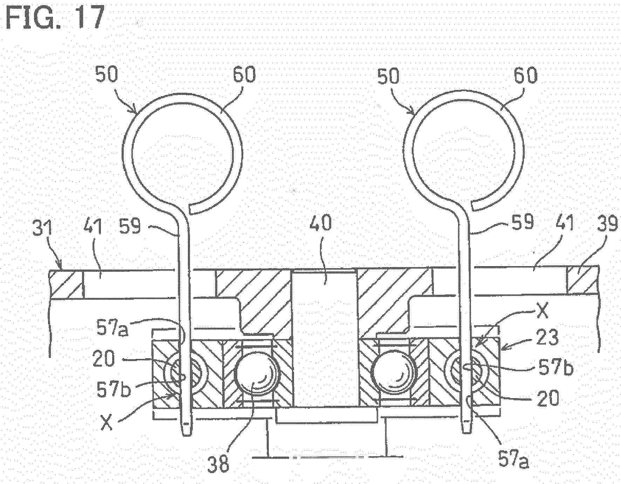

When such communication holes, which are constituted by the pin holes 57b and the set holes 57a, are used as the engagement portions X, a set member or members 50 comprising a pin or pins are used. For example, such a set member or members 50 may comprise, as illustrated in Fig. 16, a pin including an operation piece 58, and insertion pieces 59 provided at the respective ends of the operation piece 58, and insertable into the respective engagement portions X, and having the shape of " 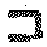 " in plan view as a whole. Alternatively, such a set member or members 50 may comprise pins each including, as illustrated in Fig. 17, a needle-shaped insertion piece 59, and a ring-shaped fingertip engagement portion 60 provided at one end of the insertion piece 59.

By inserting the set member or members 50 comprising such a pin or pins into the engagement portions X through the openings 41 of the disk portion 39 of the friction wheel 31, it is possible to maintain the bracket 23 at the position displaced toward the pivot arm 16. When the set member(s) 50 is removed from the friction wheel assembly 10, the bracket 23 becomes movable from the above displaced position.

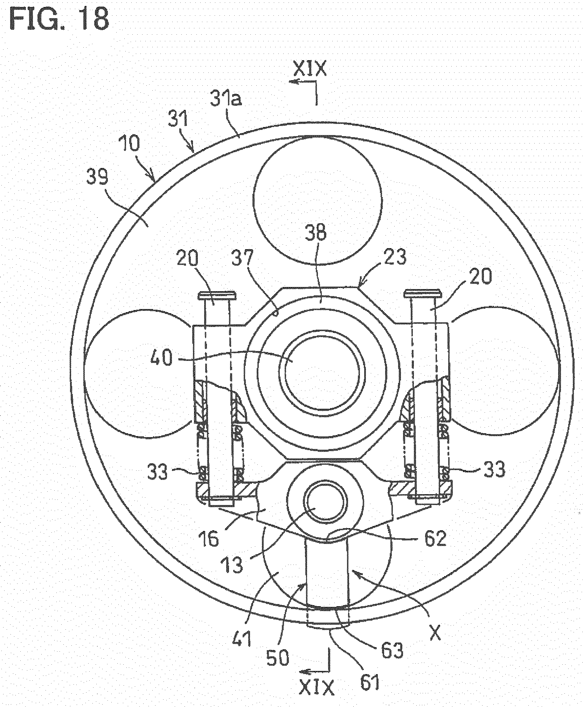

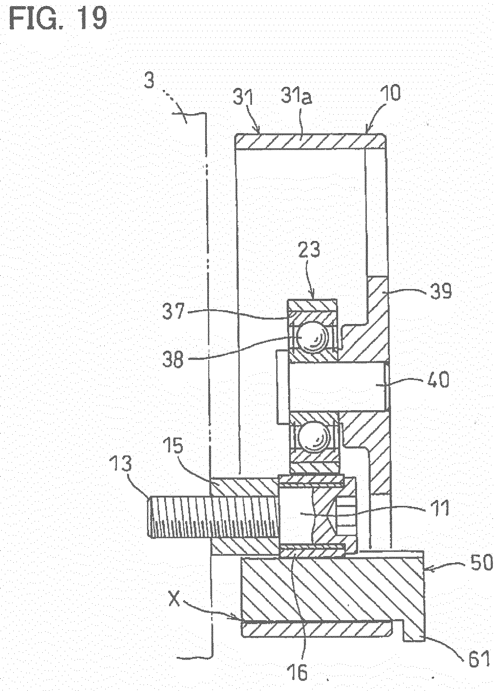

Figs. 18 and 19 illustrate a still different engagement portion X. The engagement portion X of Figs. 18 and 19 is provided between the opposed surfaces of the pivot arm 16 and the wheel body 31a of the friction wheel 31 that are opposed to each other. A set member 50 comprising a square pillar-shaped set piece is used with respect to this engagement portion X. The set member 50 comprising such a set piece includes a protruding piece 61 provided at one end of the set member 50 so as to restrict the amount by which the set member 50 is inserted into the engagement portion X; an inner side surface 62 comprising a circular arc-shaped concave surface configured to extend along the outer periphery of the pivot arm 16; and an outer side surface 63 comprising a circular arc-shaped convex surface configured to extend along the inner diameter surface of the wheel body 31a.

By inserting the set member 50 into the engagement portion X through an opening 41 formed in the disk portion 39 of the friction wheel 31, it is possible to maintain the bracket 23 at the position displaced toward the pivot arm 16. When the set member 50 is removed from the friction wheel assembly 10, the bracket 23 becomes movable from the above displaced position.

The metal film 36, which is formed on the friction wheel 31 of the first and second embodiments, may be formed on the friction wheel 31 of the third embodiment. Also, the set member or members 50 of the third embodiment may be used in the first and second embodiments.

### DESCRIPTION OF REFERENCE NUMERALS

1: driving wheel
2: driven wheel
3: engine block (for supporting the friction wheel)
10: friction wheel assembly
11: arm supporting shaft
16: pivot arm
20: guide rod
21: anti-separation portion
23: bracket
31: friction wheel
31a: wheel body
32: friction material layer
33: elastic member
36: metal film (zinc film)
39: disk portion
41: opening
50: set member
51: operation piece
52: insertion piece
53: bent portion
57a: set hole
57b: pin hole
X: engagement portion

## Claims

1. A friction wheel assembly comprising a friction wheel configured to come into frictional contact with an outer diameter surface of a driving wheel and an outer diameter surface of a driven wheel such that rotation of the driving wheel is transmitted to the driven wheel through the friction wheel,
**characterized in that** the friction wheel assembly further comprises:
an arm supporting shaft mounted to an object for supporting the friction wheel assembly;
a pivot arm having a central portion between two ends of the pivot arm, the central portion being supported by the arm supporting shaft such that the pivot arm is pivotable about the arm supporting shaft;
a pair of guide rods having first ends supported, respectively, by the two ends of the pivot arm, and extending in parallel to each other;
a bracket having a first end slidably supported by the guide rods;
wherein the friction wheel is supported by a second end of the bracket so as to be rotatable about a center axis of the friction wheel extending in parallel to the arm supporting shaft; and
elastic members supported by the respective guide rods, and biasing the bracket in a direction in which the friction wheel comes into elastic contact with the outer diameter surface of the driving wheel and the outer diameter surface of the driven wheel.

2. The friction wheel assembly according to claim 1, wherein the guide rods are arranged on an imaginary plane bisecting an axial width of the friction wheel while intersecting at right angles with the center axis of the friction wheel, about which the friction wheel is rotatable.

3. The friction wheel assembly according to claim 1 or 2, wherein the elastic members are mounted between opposed portions of the pivot arm and the bracket so as to bias the bracket in a direction away from the pivot arm.

4. The friction wheel assembly according to claim 1 or 2, wherein the elastic members are mounted between the bracket and respective second ends of the guide rods so as to bias the bracket toward the pivot arm.

5. The friction wheel assembly according to any one of claims 1 to 4, wherein the pivot arm and the bracket are received in the friction wheel, wherein the friction wheel includes a disk portion provided inside of the friction wheel, and formed with an opening,
wherein the guide rods include anti-separation portions at the respective second ends of the guide rods, and the elastic members bias the bracket toward the anti-separation portions, and
wherein the friction wheel assembly further comprises:
an engagement portion located inside of the friction wheel; and
a set member capable of being fitted to and removed from the engagement portion by being passed through the opening of the disk portion, and configured to keep the elastic members compressed with the set member fitted to the engagement portion.

6. The friction wheel assembly according to claim 5, wherein the engagement portion is one of two engagement portions each provided between opposed portions of the bracket and a corresponding of the anti-separation portions of the guide rods, and
wherein the set member comprises a strip-shaped plate including an operation piece, and a pair of insertion pieces provided at respective ends of the operation piece such that the set member has the shape of a Japanese character " 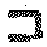 " in plan view, and configured such that the insertion pieces can be fitted to the respective two engagement portions so as to sandwich the guide rods.

7. The friction wheel assembly according to claim 5, wherein the engagement portion is one of two engagement portions each provided between opposed portions of the bracket and a corresponding of the anti-separation portions, and
wherein the set member is one of two strip-shaped plates each including a pair of insertion pieces constituting lateral sides of the strip-shaped plate such that the strip-shaped plate has the shape of U in plan view, the pair of insertion pieces of each of the strip-shaped plates being configured to be fitted to a corresponding one of the two engagement portions so as to sandwich a corresponding one of the guide rods.

8. The friction wheel assembly according to claim 6 or 7, wherein each of the guide rods has an outer periphery comprising a first half outer peripheral portion and a second half outer peripheral portion,
wherein the insertion pieces of the 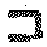 -shaped strip-shaped plate include, respectively, distal ends provided with semicircular bent portions each engageable with the first half outer peripheral portion of the corresponding one of the guide rods, or
wherein the insertion pieces of each of the U-shaped strip-shaped plates include, respectively, distal ends provided with semicircular bent portions engageable, respectively, with the first half outer peripheral portion and the second half outer peripheral portion of the corresponding one of the guide rods.

9. The friction wheel assembly according to claim 5, wherein the engagement portion is one of two engagement portions each comprising communication holes constituted by:
a set hole extending from an outer periphery of the bracket at one end of the bracket toward an outer periphery of a corresponding one of the guide rods; and
a radial pin hole formed in the outer periphery of the corresponding one of the guide rods, the two engagement portions being configured such that when the bracket slides toward the pivot arm, the set holes of the respective engagement portions communicate with the respective radial pin holes, and
wherein the set member comprises a single pin which can be fitted to and removed from the two engagement portions, or the set member is one of two set members comprising, respectively, two pins which can be fitted to and removed from the respective two engagement portions.

10. The friction wheel assembly according to claim 9, wherein the set member is one of the two set members, and wherein each of the two pins of the two set members has an end provided with a fingertip engagement portion.

11. The friction wheel assembly according to claim 9, wherein the set member comprises the single pin, and the single pin includes an operation piece, and insertion pieces provided at respective ends of the operation piece such that the set member has the shape of a Japanese character 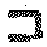 in plan view, the insertion pieces being configured to be fitted to and removed from the respective two engagement portions.

12. The friction wheel assembly according to claim 5, wherein the engagement portion is provided between opposed surfaces of the pivot arm and the friction wheel, and wherein the set member comprises a square pillar-shaped set piece which can be fitted to and removed from the engagement portion.

13. The friction wheel assembly according to any one of claims 1 to 12, further comprising:
a porous metal film arranged on an outer diameter surface of the friction wheel; and
a friction material layer arranged on the metal film, and made of a material softer than the friction wheel, which is capable of coming into contact with the driving wheel and the driven wheel.

14. The friction wheel assembly according to claim 13, wherein the metal film comprises a zinc film.

15. A method for manufacturing a friction wheel assembly comprising a friction wheel configured to come into frictional contact with an outer diameter surface of a driving wheel and an outer diameter surface of a driven wheel such that rotation of the driving wheel is transmitted to the driven wheel through the friction wheel,
the method comprising the steps of:
bringing particles including a metal or including an alloy containing the metal into collision with an outer diameter surface of the friction wheel, through which motive power can be transmitted from the driving wheel to the driven wheel, thereby forming a metal film including the metal on the outer diameter surface of the friction wheel; and
placing an elastic material which has been heated and melted on a surface of the metal film, and thereafter hardening the elastic material, thereby forming, on the surface of the metal film, a friction material layer comprising the hardened elastic material, and capable of coming into contact with the driving wheel and the driven wheel.

16. The method according to claim 15, wherein the metal comprises zinc, and the metal film comprises a zinc film.
